Europäisches Patentamt

European Patent Office

Office européen des brevets

(11) Publication number: **0 315 561**
**A2**

(12) # EUROPEAN PATENT APPLICATION

(21) Application number: **88500104.0**

(22) Date of filing: **31.10.88**

(51) Int. Cl.⁴: **A 01 K 61/00**

(30) Priority: **02.11.87 ES 8703125**

(43) Date of publication of application:
**10.05.89 Bulletin 89/19**

(84) Designated Contracting States:
**AT BE CH DE FR GB GR IT LI LU NL SE**

(71) Applicant: **Otamendi Busto, Santiago**
**Zumalacarregui, 27**
**ES-20008 San Sebastian (ES)**

(72) Inventor: **Otamendi Busto, Santiago**
**Zumalacarregui, 27**
**ES-20008 San Sebastian (ES)**

(74) Representative: **Herrero Antolin, Julio**
**HERRERO & ASOCIADOS, S.L. Alcalá, 21**
**E-28014 Madrid (ES)**

(54) **Marine fish farm.**

(57) The invention relates to a fish farm designed to be located in deep sea, and designed for intensive production of fish, constituted by a cultivation cage designed to be submerged and kept at a considerable depth, provided with ballast tanks which allow the adjustment of such depth, adjusting same to the suitable temperature level of the water, the upper end of such cultivation cage extending into a hollow column, with a minimum floating area, and which is provided on its upper end with a tower containing the personnel facilities and which projects from the surface of the water likewise being kept outside the scope of influence of the waves, as is the case of the lower cultivation cage, wherefore the stability of the fish farm is maximum.

FIG.-1

EP 0 315 561 A2

Description

## MARINE FISH FARM

### OBJECT OF THE INVENTION

The present invention relates to a marine fish farm, for cultivating fish in an intensive system with which to obtain an optimum productivity and a maximum simplification in the cleanliness of the netting, derived from the possibility of locating the fish farm at the depth and marine area which are most suiatble for these effects to be obtained.

### BACKGROUND OF THE INVENTION

The methods in the field of aquaculture, i.e., what are commonly called "marine farms" have to date been employing three systems, namely, extensive, semi-intensive and intensive.

The extensive system consists in enclosing the fish, crustaceans and mollusks in ponds, marshes, yards or large enclosures, where the fish, at a very low density, must obtain food on their own, i.e., from their environment and when they reach the commercial stage they are fished for their commercialization. Obviously, productivity in this system is low for type of cultivations must bear loads of approximately 100/200 kg. of fish per hectare and year.

The semi-intensive system is similar to the intensive system, with the sole difference that it moreover provides food for the fish, affording cultivation loads which increase to 2000/5000 kg. of fish per hectare and year.

Finally, the intensive system consists in enclosing a large group of fish in a small pond made of cement, plastic, or any other suitable materials, which fish are submitted to large streams of water, cleanliness, feeding, etc., and may be cultivated with high density, cultivation loads of approximately 30kg. of fish per hectare and year being obtained.·

Thus, it is obvious that the intensive system prevails with respect to the other two systems.

In countries with a longer marine aquaculture tradition, such as Japan and Norway, small floating cages started to be installed in the more sheltered areas of bays, fiords, lagoons, etc. However, the lack of oxygen, high temperature fluctuations, concentration of residues, outcrop of seaweed, etc. have gradually caused more open and deeper areas to be sought, and cages deisgned to withstand the dynamic efforts of areas with scarce shelter to be used.

The trend which may be observed in these countries, where aquaculture is more developed, consists in using increasingly large cages, placing them away from sheltered areas in areas which are increasingly more exposed to the dynamic effects of the waves. This is is obviously due to the fact that sheltered areas have smaller flows of water, are shallower and the decay of fiords affects the cultivation system, depriving it of oxygen and poisoning it with the production of hydrogen sulfide; temperature fluctuations are very high, with the consequent risk of diseases. In these countries it may be observed that year after year fish farms are being moved to deeper areas, but due to the many fiords and internal seas, as well as to the slow development of aquaculture, such sheltered areas essentially meet the cuurent needs.

Thus, the aforementioned problems, plus the fact that fish live in the sea and must obviously be reared in the sea, shows that this is the most ideal location for fish farms, and the deeper they are the better.

In this sense, there are known fish farms which consist in large floating platforms from which hang and are submerged in water one or many cages which contain the fish being cultivated, which cages are obtained from netting, but, however, this method, albeit solving the aforementioned problems and relating to installations in sheltered areas, gives rise to new and by no means insignificant problems.

Specifically the waves to which the fish farm will be permanently submitted, obliges same to be substantially oversized, attention having to be called in this sense to the fact that, in deep water, waves can reach heights of 22 m. and periods of 16 seconds, which shows the structural strength which fish farms designed to be placed in such areas must afford, and the limitation as regards their dimensions.

On the other hand, these floating installations imply that fish grow in a surface area where there are very considerable temperature fluctuations, both as regards time and as regards the sea area in question, which obliges the fish farm to be located in a specific place, which is most suitable for the optimum range of temperatures of a specific species of fish. And furthermore, an effect called thermocline which consists in that the surface water layer is heated as a result of solar radiation, which gives rise to a strip of approximately 30 m. of warm water, which effect essentially takes place in the summer, there being fish which swim in the upper area of the thermocline and others which do so thereunder. In the Autumn, and due to the action of the waves, the water tends to be uniform, the temperature tending to decrease towards the sea floor. The water is consequently formed of different layers or stratums down to 50/70 m., and from this depth the water temperature tends to be uniform. These changes in the water temperature are very harmful for fish, for it depletes their defenses vis-à-vis diseases.

Finally, the surface layer of the water and due to solar heating, affords the most suitable conditions for the growth of seaweed, which tend to block the netting which surrounding the fish, wherefore the frequency and intensity of cleaning operations is very important, for, obviously, and because it is an intensive cultivation, it is necessary that said netting be kept perfectly clean in order that the water inside the fish farm is constantly renewed, in order to ensure a constant suitable level of oxygenation.

### DESCRIPTION OF THE INVENTION

The marine fish farm of the invention has been designed to cultivate fish using an intensive system and in deepwater areas, fully solving the three previously mentioned problems, namely, not being affected by the effects of waves, allowing an optimum control of the temperature and a minimum growth of seaweed on the enclosureg netting or meshes thereof.

More specifically and in order to achieve the above, the fish farm of the invention affords such structural features that the cultivation cage may be considerably submerged, below the energy of the waves, whereas the auxilliary facilities for personnel, are located above sealevel, the two parts of the marine fish farm, i.e., the submerged cultivation cage and the maintenance facilities, being related through a column or tube with a small diameter which affords a practically non-existent floating area and which is the only element submitted to the effects of waves, wherefore the stability of the fish farm is optimum.

More specifically, and in accordance with a preferred practical embodiment, the cultivation cage comprises a cylinder with a diameter of 25 m. and a length of 50 m. (which is practically impossible to keep on the surface with waves of 22 m.), which cage is installed between a height of-25 and -50 m., clearly escaping the action of the waves, which is also the case of the maintenance facilities, as they are located above sea level. On the other hand, and as is known, the temperature and proportion of oxygen dissolved in water, vary depending on the depth. The fish farm of the invention not only foresees that the cultivation cage will be submerged but also that its depth may be adjusted at will, for which purpose said cage is provided with adjustable ballast tanks, similar to those used in the adjustment of the depth of a submarine, which ballast allow a vertical displacement of the cultivation cage of approximately 25 m., wherefore the position thereof may vary between a maximum height of -5/-30 m. and a minimum height of -30/-55 m.. The temperature is controlled by means of three sensors located in the upper part, in the centre and in the lower part of the cage, wherefore the temperature and the oxygen dissolved of a 25 m. water column may be known automatically at all times, and the most suitable option may be chosen for each case.

Finally, this submerged position, considerably separated from the surface, gives rise to a minimization of the obstruction in the netting due to the growth of seaweed, for, as has been previously mentioned, these essentially grow at a surface level, where heating is maximum whereas the cultivation cage of the fish farm of the invention may be placed at heights of -30/-55 m., at which depth there is practically no solar heating, wherefore growth of seaweed is practically non-existent.

Nevertheless, the netting of this huge cultivation cage may attract some species of mollusks, poliquetus, balanus, etc, as well as some minute quantities of seaweed which must be cleaned in order to keep a maximum flow of water. In this sense, it has been foreseen that the cultivation cage of the invention be provided with a rotary spraying appartus, to throw water under a pressure of 200 kg. per $cm^2$ and which automatically cleans the 360° of the cylinder constituted by said cage.

It has further been forseen that, in order to fully eliminate this problem, the surrounding netting may also be eliminated and the profiles of the structure of the cage be submitted to electric currents to produce discharges on the fish, causing same to remain at some distance from such enveloping structure, which solution, however, increases the cost of the maintenance of the fish farm, due to the consumption of energy.

DESCRIPTION OF THE DRAWINGS

In order to complete the description being made and to assist a better understanding of the characteristics of the invention, a set of drawings is attached to the present specification, as an integral part thereof, wherein, in an illustrative and non-limiting manner, the following are shown:

Figure 1 is a side elevational diagrammatic view of a marine fish farm in accordance with the object of the present invention showing the table of temperatures corresponding to the different depth in the water, as well as the cross-section of an imaginary wave and its energy development on the mass of water.

Figure 2 is a side elevational view of a specific embodiment of said fish farm.

Figure 3 is finally a profile of the assembly shown in the preceding figure.

PREFERRED EMBODIMENT OF THE INVENTION

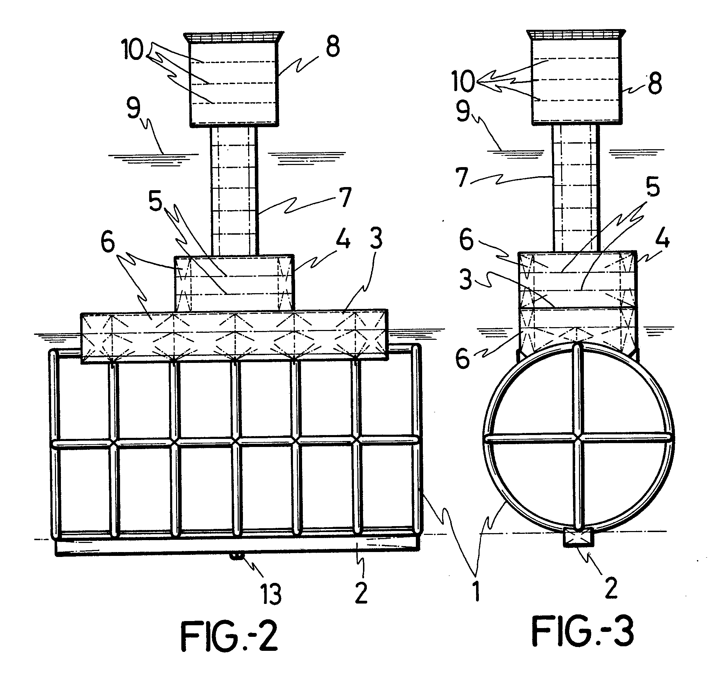

In the light of these figures and specifically of figures 2 and 3, it may be seen that the fish farm of the invention is comprised by a cultivation cage, which constitutes a cylindrical structure 1, on the basis of annular elements stiffened by means of beams and crosspieces, destined to support a netting which entirely surrounds said cage and which has not been shown in the drawings so that they may be seen more clearly, which configures a large cylindrical container which, as aforesaid, preferably has a diameter of 25 m. and a length of 50 m., and sould be placed in the water with its axis in a vertical position.

This structure 1, which is moreover stiffened by means of a lower keel 2, receives on its upper area and likewise arranged on one of its generatrixes a prismatic container 3, which essentially affects its length, and within which are established a plurality of ballast tanks which, as aforesaid, allow the depth of the cultivation cage to be adjusted, a further and shorter body 4 being estblished on body 3, which is also divided into sections by means of a series of intermediate covers 5 and which body 4 is likewise provided with conveniently located ballast tanks 6.

A hollow column 7 projects from the centre of body 4, which column is long enough for a tower 8 provided on its upper end to be positioned above the water level 9, which tower 8 is likewise provided with many covers 10, wherein are established the services for the maintenance personnel of the fish farm, such as bedrooms, toilets, kitchen-dining room, office, etc., as well as the installations for the breeding of larvae and young fish, in which column may be established the tanks for reproductive animals, and in the lower prismatic bodies related to the cylindrical structure constituting the cultivation cage itself, the food stores, the means for measuring out the food, and also chambers for larvae and young fish, together with the mentioned ballast tanks and with the activating means of the latter.

Nevertheless, irrespective of the ballast means, the rest of the divisioning of these upper elements may be variable and may be effected in accordance with any contructive policy which may be deemed convenient for each case.

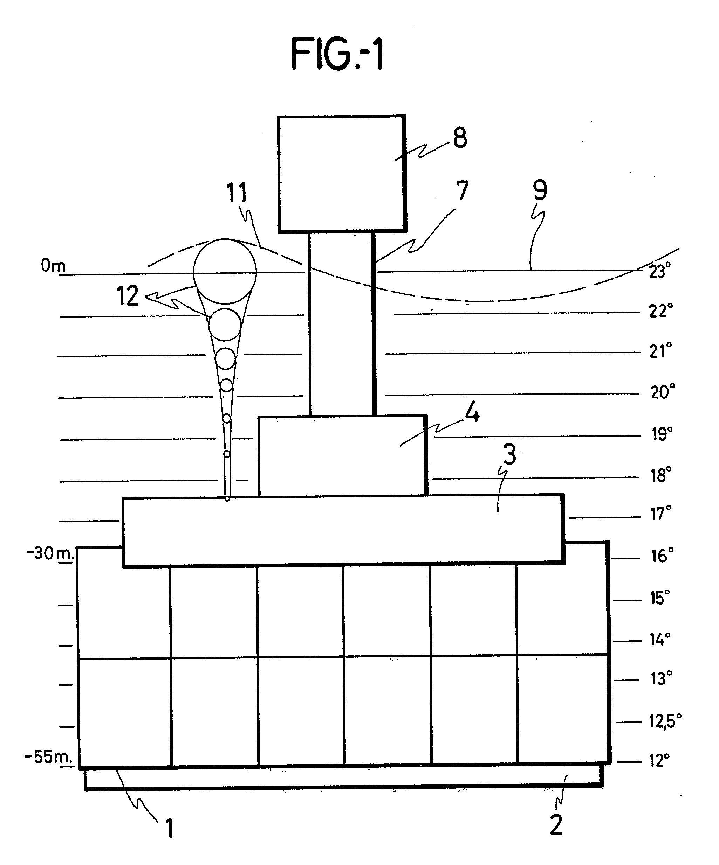

This special structure of the fish farm, and as may be observed in figure 1, allows cultivation cage 1 to be placed outside the scope of influence of the waves 11, where the diameter of the orbits 12 described by the water particles when the wave passes by and consequently the effect of the waves on said cage 1 is practically non-existent, which waves only affect the column 7 which has a small diameter, and a very small floating surface as is the case of the effects, which are practically non-existent, of the waves thereon, which waves do not affect upper tower 8 either.

In accordance with this structure, the fish farm may be installed in any deepsea area deemed convenient, fixing same to the sea floor by any suitable means, such as by means of cables which are fixed to the anchorage 13 provided in its keel 2, cultivation cage 1 being positioned outside the scope of influence of both the waves and the solar heating and at a suitable level for temperature in the said cage to be constant, by means of the actuation on the ballast tanks 6 for the elevation or lowering of the assembly, the three essential effects previously foreseen thus being obtained, namely, a relatively simple structure which does not have to suffer the pressure of the waves, optimum temperature conditions for the growth of the fish and optimum flow conditions for the water within the cultivation cage with a minimum need to clean the enclosure net, in view of the nearly total absence of solar heating.

## Claims

1.- Marine fish farm designed for deep sea intensive cultivations, essentially characterized in that it comprises a large cultivation cage, with a length of approximately 50 m. and a diameter or height of approximately 25 m., comprising a strong structure on the basis of rings stiffened by means of beams and crosspieces, over which the corresponding enclosure netting is placed, which structure is stiffened by means of a lower keel and which is provided, duly fixed to its upper generatrix, with a prismatic and elongated body wherein are established a plurality of ballast tanks which allow the adjustment at will of the depth of the fish farm as a whole, a hollow and considerably high column projecting from said body, which is provided on its upper end with a tower, which contains the personnel facilities and part of the maintenance facilities of the cultivation cage, and which must be located above sea level, the length of such column being such that the said tower is always kept above the water, whilst the ballast tanks afford a vertical displacement of the fish farm between heights preferably ranging between -5/-30 and -30/-55 m., in order that both the cultivation cage and the upper tower are kept outside the scope of influence of the waves, which only affect the column, which has a very small floating area, and that depth of the cultivation cage may be positionally adjusted in accordance with the most suitable temperature level for the fish to grow, modifying its position in accordance with the temperature fluctuations, and far from the effect of solar heating, which increases growth of seaweed which may block the netting, it further having been foreseen that in the upper tower and independently of the personnel facilities, are established maintenance facilities such as larvae and young fish chambers, which likewise occupy the column and the lower body carrying the ballast, and where the tanks for reproductive animals, the food stores and further accessories of the fish farm are located.

# FIG.-1

FIG.-2

FIG.-3